# DEMANDE DE BREVET EUROPEEN

(11) **EP 1 840 589 A1**
(43) Date de publication de la demande: **03.10.2007**
(21) Numéro de dépôt: 07356037.7
(22) Date de dépôt: 28.03.2007
(51) Int. Cl.: G01S 3/803

(54) **Dispositif de localisation acoustique et de mesure de leur intensité**

(30) Priorité: 29.03.2006 FR 0602714
(71) Demandeur: MICRODB, 69130 Ecully (FR)
(72) Inventeur: Beguet, Bernard, 69210 Sain Bel (FR)
(74) Mandataire: Maureau, Philippe

(57) **Abrégé**

L'invention concerne un dispositif de localisation de sources acoustiques et de mesure de leur intensité comprenant :
- une antenne comportant une pluralité de voies d'acquisition montées sur un support, chaque voie d'acquisition comportant une pluralité de microphones (1) reliés en série ou en parallèle à un préamplificateur (2),
- un système d'acquisition et de traitement des signaux (5) issus des voies d'acquisition,
le dispositif étant agencé pour réaliser un hologramme (6) des sources acoustiques, c'est-à-dire une répartition des pressions ou intensités acoustiques en différents points de calcul d'une même zone de mesure.

## Description

L'invention concerne un dispositif de localisation de sources acoustiques et de mesure de leur intensité.

Le confort acoustique est une exigence présente dans la plupart des domaines. Le bruit est devenu un facteur important, pris en compte notamment dans la conception des habitacles ou des moteurs dans le domaine automobile.

Afin de pouvoir diminuer l'émission de bruit, il est important de pouvoir localiser les sources acoustiques et de définir leur intensité.

Il est connu d'utiliser des antennes équipées de microphones afin d'établir, par traitement informatique, un hologramme des sources acoustiques, c'est-à-dire une répartition des pressions ou intensités acoustiques en différents points de calcul.

Les sources acoustiques à mesurer émettent généralement dans une large gamme de fréquence, c'est-à-dire aussi bien en basse fréquence qu'en haute fréquence. Il est alors nécessaire de disposer d'une antenne de dimensions importantes et équipée d'un très grand nombre de microphones afin d'obtenir une précision acceptable de localisation et de mesure de l'intensité des sources dans toute la gamme de fréquence.

En effet, afin d'obtenir une précision acceptable en haute fréquence, il est nécessaire de disposer de points de mesures peu écartés. En outre, la taille de l'antenne doit être importante afin de pouvoir localiser et mesurer correctement des sources en basse fréquence.

Toutefois, le coût d'un tel dispositif augmente avec le nombre de microphones.

Le document US 4 415 996 décrit un dispositif comportant une antenne comprenant une pluralité de microphones de mesure ainsi qu'un microphone de référence. Ce dispositif comporte en outre un système de traitement d'informations comportant une première et une seconde voies d'acquisition. Les microphones de mesure sont reliés à la première voie d'acquisition par l'intermédiaire d'un multiplexeur permettant de balayer successivement, mais non simultanément, chacun des microphones de mesure, l'autre voie d'acquisition étant reliée au microphone de référence.

Comme cela est expliqué précédemment, le nombre de points de mesure, c'est-à-dire de microphones, doit être suffisant afin d'obtenir un hologramme offrant une précision acceptable.

En outre, pour des raisons notamment liées au coût, le nombre de voies d'acquisition doit être limité. Il n'est ainsi pas envisageable de bénéficier d'une voie d'acquisition propre à chaque microphone.

La solution proposée par le document US 4 415 996 est de balayer chaque point de mesure l'un après l'autre par une seule et même voie d'acquisition, à l'aide d'un multiplexeur.

Dans ce cas, il est nécessaire de prévoir un microphone servant de référence, commun à chaque mesure, de manière à synchroniser les points de mesure les uns par rapport aux autres.

Après le balayage de l'ensemble des microphones, le nombre de points de mesure est alors suffisant pour réaliser l'hologramme avec une précision acceptable.

La durée d'acquisition d'un tel dispositif est longue, de l'ordre de plusieurs minutes pour une antenne de 256 microphones, c'est-à-dire pour un hologramme formé à partie de 256 points de mesure.

Ce type de dispositif est donc limité à la mesure de bruits stationnaires et ne peut être utilisé pour des sources non-stationnaires.

En outre, un tel dispositif ne peut être utilisé pour localiser et pour mesurer l'intensité de sources acoustiques décorrelées, c'est-à-dire n'ayant aucun lien l'une par rapport à l'autre. En effet, la resynchronisation nécessaire à l'établissement de l'hologramme ne peut pas être réalisée dans le cas de sources décorrelées.

Le document Vaucher de la Croix D. et al. « Holographie acoustique appliquée à des mesures intérieures 3D en habitacle », Ingénieur de l'automobile, RAIP. BOULOGNE, FR, n°741, novembre 2000, pages 132-136,139, présente un dispositif de localisation de sources acoustiques et de mesure de leur intensité comportant une antenne plane équipée d'un faible nombre de microphones, chaque microphone étant relié à un préamplificateur puis à une voie d'acquisition d'un système de traitement informatique.

Etant donné que, comme vu précédemment, le nombre de voies d'acquisition est limité et que chaque voie d'acquisition est reliée à un microphone, l'antenne ne comporte généralement pas un nombre suffisant de point de mesure, c'est-à-dire de microphones, pour réaliser un hologramme avec une bonne précision.

Afin de pallier le manque de points de mesure, une première acquisition est réalisée dans une première position de l'antenne. On déplace ensuite l'antenne suivant plusieurs position distinctes, de manière à réaliser plusieurs acquisitions successives, jusqu'à avoir un nombre de points de mesure suffisant pour réaliser l'hologramme.

Comme dans le cas du document US 4 415 996 et afin de synchroniser entre elles les différentes mesure, il est nécessaire de prévoir un point de référence commun à chaque mesure.

Après avoir effectué les mesures dans plusieurs positions d'antenne, le nombre de points de mesure nécessaire pour recréer l'hologramme est atteint.

Autrement dit, l'antenne de ce type de dispositif doit être déplacée afin de balayer une grande surface, de manière à créer une antenne fictive de grandes dimensions et possédant un nombre important de microphones. Les signaux émis par la ou les sources acoustiques pour les différentes positions de l'antenne sont ensuite resynchronisés par rapport à une mesure de pression acoustique de référence, de manière à établir un hologramme.

Ce procédé permet de pouvoir disposer d'une précision suffisante pour une gamme de fréquence assez large.

Toutefois comme vu précédemment, du fait de la nécessité d'effectuer une resynchronisation des différents points de mesure, un tel dispositif ne peut être utilisé pour localiser et pour mesurer l'intensité de sources acoustiques décorrelées.

En outre, la durée totale de l'acquisition est importante. Ainsi, ce type de dispositif est, comme précédemment, limité à la mesure de bruits stationnaires.

La présente invention vise donc à remédier à ces inconvénients en proposant un dispositif de localisation de sources acoustiques et de mesure de leur intensité, peu onéreux, pouvant être utilisé dans une large gamme de fréquences et capable de localiser et de mesurer l'intensité de sources décorrelées et non stationnaires.

A cet effet, elle concerne un dispositif de localisation de sources acoustiques et de mesure de leur intensité, caractérisé en ce qu'il comprend :
- une antenne comportant une pluralité de voies d'acquisition montées sur un support, chaque voie d'acquisition comportant une pluralité de microphones reliés en série ou en parallèle à un préamplificateur,
- un système d'acquisition et de traitement des signaux issus des voies d'acquisition,
le dispositif étant agencé pour réaliser un hologramme des sources acoustiques, c'est-à-dire une répartition des pressions ou intensités acoustiques en différents points de calcul d'une même zone de mesure.

Il est à noter que les microphones n'intègrent pas chacun un préamplificateur, comme tel est le cas habituellement, mais qu'une pluralité de microphones disposés en série ou en parallèle sont associés à un seul préamplificateur.

Le prix d'un microphone étant faible par rapport au prix d'un préamplificateur, ce dispositif est peu onéreux, un seul préamplificateur étant utilisé pour une pluralité de microphones.

En outre, ce dispositif permet de diminuer considérablement le nombre de voies d'acquisition puisque le dispositif selon l'invention nécessite une voie d'acquisition par groupe de microphones. Ceci permet également de diminuer le prix du système d'acquisition et de traitement des signaux.

De plus, l'encombrement et le poids de l'antenne sont faibles puisque celle-ci n'est équipée que des microphones et non pas du ou des préamplificateurs, plus volumineux et plus lourds, qui sont situés à distance.

De même, la taille et le poids du système d'acquisition et de traitement des signaux sont d'autant plus importants que le nombre de voies d'acquisition est grand.

Le dispositif selon l'invention comporte donc une antenne comportant un nombre de points de mesure suffisant afin de réaliser un hologramme et permet une acquisition simultanée de l'ensemble des points de mesure, sans nécessiter de synchronisation.

Ce dispositif est donc particulièrement adapté à l'étude de sources de bruits non stationnaire et décorrelées.

Il est également possible de réaliser une succession d'hologrammes distincts correspondant à une pluralité de positions de l'antenne, et d'assembler ces différents hologrammes de manière à former un hologramme global couvrant une zone de mesure très large.

Dans ce cas, il peut notamment être intéressant de calculer, pour chaque position d'antenne, un hologramme sous forme de génératrice ou de ligne, et de générer un hologramme global de type plan, formé par la mise côte à côte des hologrammes successifs de type ligne, sans avoir à effectuer de synchronisation.

Selon une caractéristique de l'invention les microphones d'une même voie d'acquisition sont disposés le long d'un même arc de cercle, les voies d'acquisition définissant des arcs de cercle orientés dans le même sens, disposés le long d'un cylindre et décalés dans le sens longitudinal de celui-ci.

La structure particulière d'un tel dispositif permet de disposer d'une bande de mesure située le long de l'axe du cylindre sur la surface duquel sont agencés les différents microphones.

Il est possible de déplacer l'antenne de manière à effectuer plusieurs hologramme de type génératrice et les assembler de manière à former un hologramme global couvrant une large zone de mesure. Comme précédemment, aucune synchronisation n'est nécessaire afin de former l'hologramme global.

En outre, la courbure de l'antenne permet de s'affranchir des sources placées en arrière de celle-ci.

Préférentiellement, l'antenne est équipée d'au moins 10 voies d'acquisitions, chaque voie étant équipée d'au moins 10 microphones.

Le nombre important de microphones de l'antenne permet de pouvoir réaliser des mesures pour des fréquences élevées, tout en ayant un nombre de voies faible, de manière à limiter le coût.

Avantageusement, les microphones d'une même voie d'acquisition sont disposés sur un même cercle, les voies d'acquisition définissant des cercles dont les centres sont disposés sur un même axe.

De même que précédemment, il est possible de déplacer l'antenne de manière à couvrir une large zone de mesure.

Ce type d'antenne permet de focaliser la mesure en un point, soit par l'intermédiaire d'un décalage temporel ajouté par traitement numérique des signaux issus des voies d'acquisition, soit par décalage spatial des cercles le long de l'axe.

Préférentiellement, l'antenne comporte au moins 3 voies d'acquisition définissant au moins 3 cercles de diamètres croissants.

Ce type d'antenne permet alors de pouvoir réaliser des mesures pour des fréquences élevées, tout en ayant un faible nombre de voies d'acquisition.

Selon une caractéristique de l'invention, l'antenne comporte au moins 4 voies d'acquisition définissant 4 cercles de diamètres croissants, les voies d'acquisition comportant respectivement, par ordre croissant des diamètres de cercles, au moins 4, 8, 12 et 16 microphones.

Préférentiellement, le dispositif est équipé de moyens de déplacement de l'antenne destinés à modifier sa position par rapport aux sources acoustiques à localiser.

Avantageusement, les microphones sont du type électret, ce type de microphones s'adaptant à de nombreuses applications tout en étant d'un coût faible.

Selon une caractéristique de l'invention, l'antenne est équipée d'une caméra destinée à visualiser les zones de mesure.

De cette manière, il est possible de visualiser en temps réel, par exemple de façon superposée, la zone de mesure et l'hologramme issu du traitement des signaux.

De toute façon l'invention sera bien comprise à l'aide de la description qui suit, en référence au dessin schématique annexé représentant, à titre d'exemples non limitatifs, plusieurs formes d'exécution de ce dispositif.
Figure 1 est une vue de face d'une antenne de l'art antérieur ;
Figure 2 est une vue schématique d'une voie d'acquisition d'un dispositif selon l'invention ;
Figure 3 est une vue correspondant à la figure 1 d'une antenne selon une première forme de réalisation du dispositif de l'invention ;
Figure 4 est une vue en perspective d'une antenne selon une deuxième forme de réalisation ;
Figure 5 est une vue correspondant à la figure 3 d'une troisième forme de réalisation ;

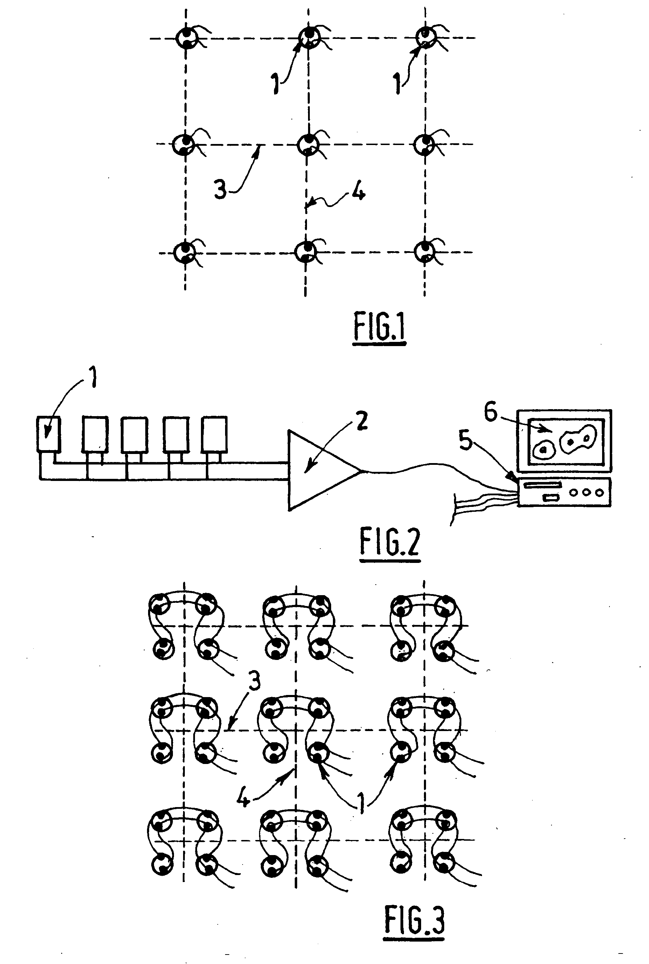

La figure 1 représente une antenne de l'art antérieur.

Cette antenne est composée de 9 voies d'acquisitions, chacune comportant un microphone 1 relié à un préamplificateur 2. Ces voies d'acquisition sont disposées sur un support, à l'intersection de lignes 3 et de colonnes 4 fictives régulièrement espacées.

L'antenne comporte ainsi 9 microphones 1, les lignes et les colonnes étant espacées respectivement de 4 cm les unes par rapport aux autres.

Une telle antenne permet d'effectuer des mesures pour des fréquences allant jusqu'à 4 kHz.

La figure 2 représente schématiquement une voie d'acquisition comportant une pluralité de microphones 1 reliés en parallèle à un préamplificateur 2. Selon une variante non représentée de l'invention, les microphones peuvent également être reliés en série. Le préamplificateur 2 est relié à un système classique 5 d'acquisition et de traitement des signaux.

Ce dernier permet d'établir un hologramme 6 des sources acoustiques, c'est-à-dire une répartition des pressions ou intensités acoustiques en différents points de calcul d'une même zone de mesure.

Lors d'une mesure, les signaux issus des différents microphones 1 sont alors additionnés, du fait de la structure en série ou en parallèle de la voie, puis transmis au préamplificateur 2.

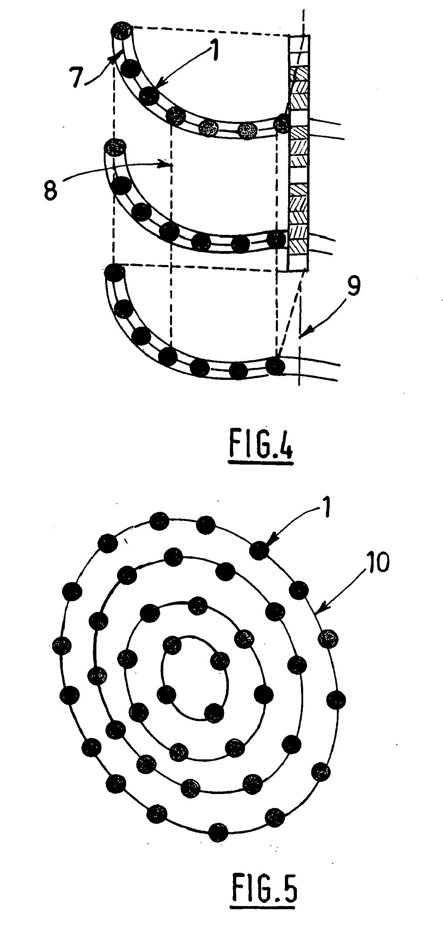

La figure 3 représente une antenne appartenant à un dispositif selon l'invention, de structure similaire à l'antenne de la figure 1. Cette antenne comprend 9 voies d'acquisitions équipées chacune de 4 microphones 1. Comme précédemment, les microphones sont disposés à l'intersection de lignes 3 et de colonnes 4 régulièrement espacées.

L'antenne comporte ainsi 36 microphones, espacés cette fois de 2 cm.

Du fait de la présence d'un grand nombre de microphones, une telle antenne permet d'effectuer des analyses pour des fréquences allant jusqu'à 8 kHz.

II est à noter que la taille de l'antenne n'a pas été modifiée de sorte que la limite en basse fréquence permettant de réaliser une mesure satisfaisante est la même pour chacune des antennes précitées.

En outre, le nombre important de microphones 1 permet d'établir directement l'hologramme 6 des sources acoustiques, sans avoir à procéder à un déplacement de l'antenne puis à une resynchronisation des signaux par rapport à une source de référence. De ce fait, ce type d'antenne peut être utilisé pour des dispositifs de localisation et de mesure d'intensité de sources décorrelées.

Le dispositif selon l'invention permet alors de localiser et de mesurer l'intensité de sources acoustiques dans une large gamme de fréquences, pour un coût quasiment identique à celui d'un dispositif classique comportant une antenne de l'art antérieur représentée en figure 2, le nombre de préamplificateurs et le nombre de voies étant restés les mêmes.

Un second type d'antenne est représenté en figure 4.

Les voies d'acquisition de cette antenne sont réparties le long d'arcs de cercle 7 disposés sur la paroi d'un cylindre fictif 8 et régulièrement espacés dans la direction longitudinale du cylindre 8. Les arcs de cercle sont orientés dans le même sens de sorte que leurs extrémités soient respectivement alignées dans la direction longitudinale du cylindre.

L'antenne est par exemple composée de 20 voies d'acquisition, chacune étant équipée de 20 microphones 1, bien que ces éléments soient représentés en plus faible nombre pour des raisons de lisibilité. La hauteur et la largeur d'une telle antenne sont par exemple tous deux de l'ordre de 80 cm.

Dans ce cas, l'antenne permet de réaliser des analyses pour des fréquences comprises sensiblement entre 425 Hz et 4000 Hz.

Pour une position déterminée de l'antenne, le traitement des signaux permet de calculer, par focalisation, l'hologramme des sources acoustiques sur une bande située sur l'axe 9 du cylindre fictif 8.

De la même manière que précédemment, le nombre important de microphones permet de pouvoir réaliser l'hologramme sans avoir à déplacer l'antenne puis à resynchroniser les différents signaux.

En outre, un tel dispositif permet de s'affranchir des sources placées à l'arrière de l'antenne, ce qui se révèle intéressant notamment dans le cas de détection de sources acoustiques à l'intérieur d'un habitacle, par exemple dans le domaine automobile.

Il est possible de déplacer l'antenne, par exemple manuellement ou à l'aide d'un système mécanique du type bras motorisé, puis de réaliser le calcul d'un hologramme pour chaque position de l'antenne, un hologramme complet étant obtenu à partir des hologrammes de chaque position de l'axe de focalisation et de calcul de l'antenne.

L'obtention d'un hologramme complet est réalisé de manière connue en soi, par exemple par lissage à l'aide d'un logiciel graphique.

La figure 5 représente une antenne d'une troisième forme de réalisation du dispositif selon l'invention.

Cette antenne comporte 4 voies d'acquisition dont les microphones sont disposés le long de 4 cercles 10 concentriques de diamètres différents.

Les microphones d'une même voie sont disposés sur un même cercle, les cercles comportant respectivement, par ordre croissant du diamètre du cercle, 4, 8, 12 et 16 microphones 1.

Lors de la mesure, un décalage temporel est introduit entre les signaux issus de chaque voie d'acquisition, de manière à pouvoir focaliser la mesure en un point.

On obtient alors un hologramme ponctuel de calcul par traitement des signaux issus des différentes voies d'acquisition..

Le décalage temporel est introduit par traitement numérique, de manière connue en soi.

Comme précédemment, cette antenne peut être déplacée manuellement ou par un système mécanique, de manière à réaliser un hologramme complet par addition des différents hologrammes ponctuels.

De manière supplémentaire, l'antenne peut être équipée d'une caméra, ce qui permet de visualiser en temps réel les objets sur lesquels portent les mesures, en particulier au niveau du point de focalisation.

Selon une variante de réalisation non représentée, les cercles 10 sur lesquels sont placés les microphones 1 ont des centres décalés sur un même axe, les microphones étant disposés sur la surface d'une cupule fictive de manière à pouvoir focaliser en un point, sans avoir besoin d'introduire un décalage temporel par traitement numérique.

Bien que le traitement des signaux issus d'une telle antenne soit plus facile, ce type de structure impose nécessairement des dimensions plus importantes pour des propriétés similaires en terme de fréquence d'utilisation et de précision.

Comme il va de soi, l'invention ne se limite pas aux seules formes d'exécution de ce système, décrites ci-dessus à titre d'exemple, mais elle en embrasse au contraire toutes les variantes. C'est ainsi notamment que la forme générale de l'antenne peut être différente.

## Revendications

1. Dispositif de localisation de sources acoustiques et de mesure de leur intensité, **caractérisé en ce qu'**il comprend :
- une antenne comportant une pluralité de voies d'acquisition montées sur un support, chaque voie d'acquisition comportant une pluralité de microphones (1) reliés en série ou en parallèle à un préamplificateur (2),
- un système d'acquisition et de traitement des signaux (5) issus des voies d'acquisition,
le dispositif étant agencé pour réaliser un hologramme (6) des sources acoustiques, c'est-à-dire une répartition des pressions ou intensités acoustiques en différents points de calcul d'une même zone de mesure.

2. Dispositif selon la revendication 1, **caractérisé en ce que** les microphones (1) d'une même voie d'acquisition sont disposés le long d'un même arc de cercle (7), les voies d'acquisition définissant des arcs de cercle (7) orientés dans le même sens, disposés le long d'un cylindre (8) et décalés dans le sens longitudinal de celui-ci.

3. Dispositif selon l'une des revendications 1 et 2, **caractérisé en ce que** l'antenne est équipée d'au moins 10 voies d'acquisitions, chaque voie étant équipée d'au moins 10 microphones (1).

4. Dispositif selon la revendication 1, **caractérisé en ce que** les microphones (1) d'une même voie d'acquisition sont disposés sur un même cercle, les voies d'acquisition définissant des cercles (10) dont les centres sont disposés sur un même axe.

5. Dispositif selon la revendication 4, **caractérisé en ce que** l'antenne comporte au moins 3 voies d'acquisition définissant au moins 3 cercles (10) de diamètres croissants.

6. Dispositif selon l'une revendication 4 et 5, **caractérisé en ce que** l'antenne comporte au moins 4 voies d'acquisition définissant 4 cercles (10) de diamètres croissants, les voies d'acquisition comportant respectivement, par ordre croissant des diamètres de cercles (10), au moins 4, 8, 12 et 16 microphones.

7. Dispositif selon l'une des revendications 1 à 6, **caractérisé en ce qu'**il est équipé de moyens de déplacement de l'antenne destinés à modifier sa position par rapport aux sources acoustiques à localiser.

8. Dispositif selon l'une des revendications 1 à 7, **caractérisé en ce que** les microphones (1) sont du type électret.

9. Dispositif selon l'une des revendications 1 à 8, **caractérisé en ce que** l'antenne est équipée d'une caméra destinée à visualiser les zones de mesure.
